(19) Europäisches Patentamt
European Patent Office
Office européen des brevets

(11) Veröffentlichungsnummer: **0 475 907 B1**

(12) **EUROPÄISCHE PATENTSCHRIFT**

(45) Veröffentlichungstag der Patentschrift: **02.11.95**

(51) Int. Cl.[6]: **C08K 5/13**

(21) Anmeldenummer: **91810712.9**

(22) Anmeldetag: **05.09.91**

# (54) Verfahren zur Herstellung mouldingechter Artikel.

(30) Priorität: **14.09.90 CH 2988/90**

(43) Veröffentlichungstag der Anmeldung:
**18.03.92 Patentblatt 92/12**

(45) Bekanntmachung des Hinweises auf die Patenterteilung:
**02.11.95 Patentblatt 95/44**

(84) Benannte Vertragsstaaten:
**BE CH DE ES FR GB IT LI**

(56) Entgegenhaltungen:
**DD-A- 51 983**
**DE-A- 2 721 730**
**GB-A- 1 118 876**
**GB-A- 2 174 731**
**US-A- 3 665 031**
**US-A- 3 940 410**

(73) Patentinhaber: **CIBA-GEIGY AG**
**Klybeckstrasse 141**
**CH-4002 Basel (CH)**

(72) Erfinder: **Eckhardt, Claude, Dr.**
**16, Rue des Jonquilles**
**F-68400 Riedisheim (FR)**
Erfinder: **Rembold, Manfred, Dr.**
**Im Aeschfeld 21**
**CH-4147 Aesch (CH)**
Erfinder: **Fuso, Francesco, Dr.**
**Allschwilerstrasse 17**
**CH-4142 Münchenstein (CH)**
Erfinder: **Reinert, Gerhard, Dr.**
**Weiherweg 1/7**
**CH-4123 Allschwil (CH)**

**EP 0 475 907 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft ein Verfahren zur Herstellung von polyamidfaserhaltigen hochweissen oder besonders farbbrillianten Textilien mit verbesserten Mouldingechtheiten.

Gewisse Artikel aus Kunstfasern werden durch thermische Behandlung geformt (Moulding). Es handelt sich vor allem um hochwertige Artikel aus optisch aufgehellten Polyamidfasern, oder auch solche, welche aus Polyamid/Polyurethan bestehen. Die heissen Pressformen verursachen in der Regel eine bestimmte Vergilbung oder gar Verbräunung des optisch aufgehellten Textilmaterials. Diese Erscheinung ist stark von der Polyamidqualität, aber vor allem von dem optischen Aufheller abhängig, und führt zu Schwankungen in der Produktequalität solcher Artikel.

Aufgabe der vorliegenden Erfindung ist es daher, ein neues Verfahren zur Herstellung von polyamidfaserhaltigen hochweissen oder besonders farbbrillianten Textilien mit verbesserten Mouldingechtheiten bereitzustellen.

Es wurde nun gefunden, dass bei der Verwendung bestimmter gehinderter Phenole und üblicher optischer Aufheller, sowie auch in Verbindung mit Farbstoffen die obigen Nachteile ganz oder zumindest in grossem Masse beseitigt werden können. Überraschenderweise erhält man so eine Ware, welche nach dem Moulding im Vergleich zum nur optisch aufgehellten Material einen höheren Weissgrad, eine höhere Farbbrillianz und ausserdem geringere Qualitätsschwankungen aufweist.

Die Erfindung betrifft daher ein Verfahren zur Herstellung von geformten polyamidfaserhaltigen Textilien mit verbesserten Mouldingechtheiten, dadurch gekennzeichnet, dass man vor, während oder nach dem optischen Aufhellen und gegebenfalls Färben der Fasern eine Verbindung der Formel

(I) $(A\text{-}Y\text{-})_n Z(\text{-}W)_m$

in welcher A den Rest eines sterisch gehinderten Phenols der Benzolreihe, Y einen Rest der Formeln (II) oder (III)

(II) 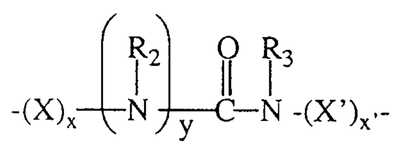

(III) 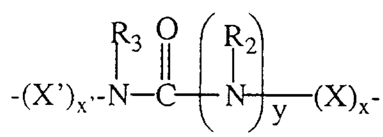

worin

X und X' unabhängig voneinander Alkylen, Oxaalkylen oder Thiaalkylen,

$R_2$ und $R_3$ unabhängig voneinander Wasserstoff oder eine gegebenenfalls substituierte Alkyl- oder Arylgruppe und

x, x' und y unabhängig voneinander je 0 oder 1 sind,

Z einen aliphatischen oder einen carbocyclischen aromatischen Rest, wobei letzterer höchstens zwei mono- oder bicyclische Kerne enthält,

W die Sulfogruppe und

m und n unabhängig voneinander 1 oder 2 bedeuten, und deren wasserlösliche Salze, auf die Fasern aufbringt und anschliesslich die so behandelten Textilien formt. Gehinderte Phenole im Sinne der Erfindung sind Verbindungen der Formel (I)

( I) $(A\text{-}Y\text{-})_n Z(\text{-}W)_m$

in welcher

A den Rest eines sterisch gehinderten Phenols der Benzolreihe, Y einen Rest der Formeln (II) oder (III)

(II) 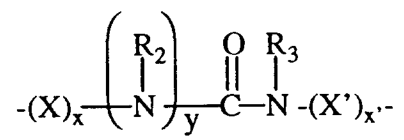

(III) 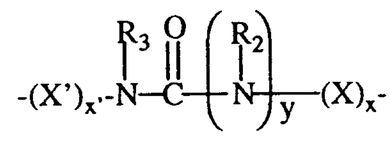

worin
X und X' unabhängig voneinander Alkylen, Oxaalkylen oder Thiaalkylen,
$R_2$ und $R_3$ unabhängig voneinander Wasserstoff oder eine gegebenenfalls substituierte Alkyl- oder Arylgruppe und
x, x' und y unabhängig voneinander je 0 oder 1 sind,
Z einen aliphatischen oder einen carbocyclischen aromatischen Rest, wobei letzterer höchstens zwei mono- oder bicyclische Kerne enthält,
W die Sulfogruppe und
m und n unabhängig voneinander 1 oder 2 bedeuten, und deren wasserlösliche Salze.

Die Phenole der Formel (I) und deren Verwendung als Antioxidanzien für die Stabilisierung von basische Gruppen enthaltenden organischen Kunststoffen, z.B. Textilien aus Poliamidfasern sind in US-A-3 665 031 beschrieben.

A in Formel (I) bedeutet beispielsweise einen Monohydroxyphenyl-Rest, in dem mindestens eine o-Stellung zur Hydroxylgruppe durch eine Alkyl-, Cycloalkyl- oder Aralkylgruppe substituiert ist und der gegebenenfalls noch weitere Substituenten trägt.

Alkylgruppen in o-Stellung zur Hydroxylgruppe von A können gerade oder verzweigt sein und 1-12, vorzugsweise 4-8 C-Atome enthalten. Bevorzugt sind dabei $\alpha$-verzweigte Alkylgruppen. Es handelt sich dabei beispielsweise um die Methyl-, Ethyl-, iso-Propyl-, tert.Butyl-, iso-Amyl-, Octyl-, tert.Octyl- und Dodecylgruppe. Besonders bevorzugt ist dabei die tert.Butylgruppe.

Cycloalkylgruppen in o-Stellung zur Hydroxylgruppe von A enthalten 6-10, vorzugsweise 6-8 C-Atome. Beispiele dafür sind die Cyclohexyl-, Methylcyclohexyl- und Cyclooctylgruppe.

Aralkylgruppen in o-Stellung zur Hydroxylgruppe von A enthalten 7-10, vorzugsweise 8-9 C-Atome. Beispiele dafür sind die $\alpha$-Methyl- und $\alpha,\alpha$-Dimethylbenzylgruppe.

Der Rest A kann daneben noch durch weitere, vorstehend definierte Alkyl-, Cycloalkyl- oder Aralkylgruppen substituiert sein, wobei diese bevorzugt in o'- oder p-Stellung zur Hydroxylgruppe stehen, soweit diese Stellungen nicht durch die Bindung an Y besetzt sind. Vorteilhaft ist weiterhin mindestens eine m-Stellung zur Hydroxylgruppe unsubstituiert, während die andere durch niedere Alkylgruppen, wie die Methylgruppe, substituiert sein kann.

Aus Gründen der leichten Zugänglichkeit und ihrer günstigen Wirkung als Mouldingechtheits-Verbesserer sind Verbindungen der Formel (I) besonders bevorzugt, in denen A einen Rest der Formel (IV)

(IV) 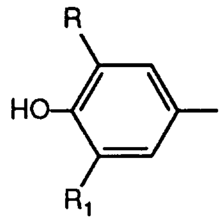

in der R und $R_1$ unabhängig voneinander Wasserstoff, Methyl oder tert.Butyl darstellen und die Summe der Kohlenstoffatome von R und $R_1$ mindestens 2 beträgt, bedeutet.

X und X' in Formeln (II) und (III) können geradkettig oder verzweigt sein und 1 bis 8, vorzugsweise 1 bis 5 C-Atome enthalten. Beispiele dafür sind der Methylen-, Ethylen-, Trimethylen-, Propylen-, 2-Thiatrimethylen- oder der 2-Oxapentamethylenrest.

Besonders bevorzugt sind Verbindungen, bei denen in den Resten X und X' nicht zwei Heteroatome an das gleiche gesättigte, d.h. tetraedrische Kohlenstoffatom gebunden sind.

$R_2$ oder $R_3$ in Formeln (II) und (III) können als Alkylgruppe geradkettig oder verzweigt sein und 1 bis 18, vorzugsweise 1 bis 8 C-Atome enthalten. Beispiele dafür sind die Methyl-, Ethyl-, iso-Propyl-, Pentyl-, Octyl-, Dodecyl- und Octadecylgruppe.

Als substituierte Alkylgruppe bedeuten $R_2$ oder $R_3$ beispielsweise eine Hydroxyalkyl-, Alkoxyalkyl-, Aminoalkyl-, Alkylaminoalkyl- oder eine Dialkylaminoalkylgruppe mit insgesamt 2 bis 10, vorzugsweise 2 bis 5 C-Atomen. Beispiele dafür sind die $\beta$-Hydroxyethyl-, $\beta$-Methoxyethyl, $\beta$-Aminoethyl-, $\beta,\beta'$-Diethylaminoethyl- oder die $\beta$-Butylaminoethylgruppe.

$R_2$ oder $R_3$ können auch eine Arylgruppe, bevorzugt die Phenylgruppe darstellen.

Dabei zeigen Verbindungen, in denen y in Formeln (II) und (III) Null bedeutet, im allgemeinen eine wesentlich bessere mouldingechtheitsverbessernde Wirkung als solche Verbindungen, in denen y Eins bedeutet.

Besonders bevorzugt sind Verbindungen der Formel (I), in denen Y einen Rest der Formel (V)

(V) 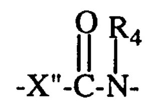

worin

$R_4$ Wasserstoff oder $C_1$-$C_4$-Alkyl und

X'' $C_1$-$C_4$-Alkylen bedeuten, darstellt.

Z in Formel (I) bedeutet beispielsweise den Rest eines unsubstituierten oder durch Carboxylgruppen substituierten niederen Alkans mit mindestens zwei C-Atomen, den Rest eines unsubstituierten oder durch Chlor oder Brom, $C_1$-$C_4$-Alkyl, $C_1$-$C_4$-Alkoxy, $C_1$-$C_4$-Alkoxycarbonylamino, Hydroxy, Carboxy, Phenylethyl, Styryl, Phenyl, Phenoxy, Phenylthio, Phenylsulfonyl oder Acylamino substituierten Benzolkerns, wobei die Gruppe W direkt an diesen Benzolkern oder an einen monocyclischen Arylrest eines seiner Substituenten gebunden sein kann, oder es bedeutet den Naphthalin- oder Tetralinrest.

Als Rest eines niederen Alkans kann Z geradkettig oder verzweigt sein und 2 bis 5, vorzugsweise 2 C-Atome enthalten. Es handelt sich also beispielsweise um den Ethylen-, Propylen-, Trimethylen- oder Pentamethylenrest. Dieser Rest kann gegebenenfalls noch durch Carboxylgruppen substituiert sein. Ein Beispiel dafür ist der Carboxyethylenrest.

Als Benzolrest kann Z in Formel (I) noch weiter substituiert sein. Es kann beispielsweise geradkettige oder verzweigte $C_1$-$C_4$-Alkylreste aufweisen, z.B. durch die Methyl-, Ethyl- oder iso-Propylgruppe substituiert sein; dabei ist die Methylgruppe bevorzugt. $C_1$-$C_4$-Alkoxygruppen als Substituenten eines Benzolrestes Z sind beispielsweise die Methoxy-, Ethoxy- oder Butoxygruppe. Ist Z als Benzolrest durch eine Acylaminogruppe substituiert, so leitet sich dessen Acylrest insbesondere von einer $C_2$-$C_6$-aliphatischen oder einer monocarbocyclischen aromatischen Carbonsäure ab. Beispiele sind der Rest der Essig-, Propion-, $\beta$-Methoxypropion-, Benzoe-, Aminobenzoe- oder Methylbenzoesäure. Beispiele für $C_1$-$C_4$-Alkoxycarbonylaminogruppen als Substituenten eines Benzolrestes Z sind der Methoxy-, Ethoxy- oder Butoxycarbonylaminorest.

Enthält die Gruppe Z als Substituenten Phenylethyl-, Styryl-, Phenyl-, Phenoxy-, Phenylthio- oder Phenylsulfonylgrvppen, so können diese gegebenenfalls durch Chlor oder Brom, $C_1$-$C_4$-Alkylgruppen, wie die Methylgruppe, Aminogruppen, $C_1$-$C_4$-Alkoxygruppen, wie die Methoxygruppe, Acylaminogruppen, wie die Acetyl- oder Benzoylaminogruppe oder Alkoxycarbonylaminogruppen, wie die Methoxy- oder Ethoxycarbonylaminogruppe substituiert sein.

Gegebenenfalls können auch mehrere, gleiche oder verschiedene der oben genannten Substituenten des Benzolrestes Z oder seiner arylgruppenhaltigen Substituenten gleichzeitig vorhanden sein.

Als Naphthalinrest kann die Gruppe Z gegebenenfalls noch durch $C_1$-$C_4$-Alkyl- oder Alkoxygruppen, wie die Methyl- oder Methoxygruppe substituiert sein.

Die Sulfogruppe W in Formel (I) ist vorzugsweise frei, kann aber auch in Form ihrer Alkali- oder Erdalkalisalze, des Ammoniumsalzes oder der Salze organischer Stickstoffbasen vorliegen, dessen Kation der Formel (VI)

(VI) $\overset{+}{N}R'R''R'''R''''$

entspricht, worin
R', R'', R''', R'''' unabhängig voneinander Wasserstoff, einen $C_1$-$C_4$-Alkyl- oder $\beta$-Hydroxy-$C_1$-$C_4$-Alkylrest oder einen Cyclohexylrest bedeuten, wobei mindestens zwei dieser Reste miteinander ein carbo- oder heterocyclisches Ringsystem bilden können.

Beispiele für organische Stickstoffbasen, die mit der Gruppe W solche Ammoniumsalze bilden können, sind: Trimethylamin, Triethylamin, Triethanolamin, Diethanolamin, Ethanolamin, Cyclohexylamin, Dicyclohexylamin, Hexamethylenimin oder Morpholin.

Besonders günstig in ihrer mouldingechtheitsverbessernden Wirkung sind Verbindungen der Formel (VII)

(VII) 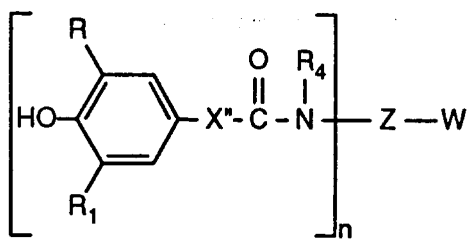

In dieser Formel bedeuten
R und $R_1$ unabhängig voneinander Methyl oder tert.Butyl,
$R_4$ Wasserstoff oder $C_1$-$C_4$-Alkyl,
X'' $C_1$-$C_4$-Alkylen,
Z den Ethylenrest, einen zwei- oder dreiwertigen Rest des Benzols oder Naphthalins oder einen zweiwertigen Rest des Diphenylethers,
W die Sulfogruppe und
n 1 oder 2.

Die Gruppe W kann in diesen Verbindungen frei oder auch in Form ihrer vorstehend definierten Salze vorliegen.

Unter den Verbindungen der Formel (VII) sind diejenigen mit R = $R_1$ = Methyl ökonomisch besonders vorteilhaft, während diejenigen mit R = Methyl und $R_1$ = tert.Butyl und besonders diejenigen mit R = $R_1$ = tert.Butyl eine ausgezeichnete Alkalibeständigkeit besitzen.

Die wasserlöslichen Verbindungen der Formel (I) sind bekannt, z.B. aus US-A-3 665 031 und können nach an sich bekannten Methoden hergestellt werden.

Als erfindungsgemäss verwendbare Verbindungen der Formel (I) kommen z.B. Verbindungen der Formel

(VIII) 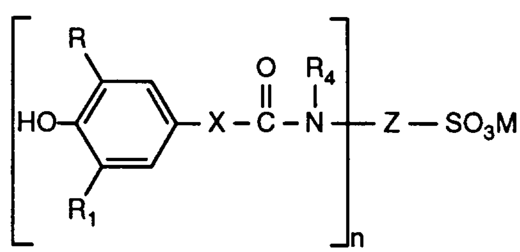

worin R, $R_1$, $R_4$ X, Z, M und n die nachstehenden Bedeutungen annehmen (Tabelle 1) in Frage.

Tabelle 1:

| Verbindung Nr. | R | $R_1$ | X | $R_4$ | Z-$SO_3$M | M | n |
|---|---|---|---|---|---|---|---|
| 1 | tert$C_4H_9$ | tert$C_4H_9$ | $C_2H_4$ | H | $-CH_2-CH_2-SO_3M$ | Na | 1 |
| 2 | tert$C_4H_9$ | tert$C_4H_9$ | $C_2H_4$ | H | 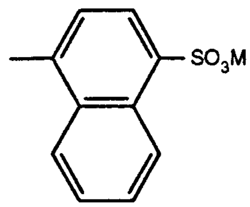 | Na | 1 |
| 3 | tert$C_4H_9$ | tert$C_4H_9$ | $C_2H_4$ | H | 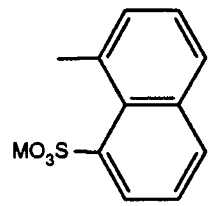 | Na | 1 |
| 4 | tert$C_4H_9$ | tert$C_4H_9$ | $C_2H_4$ | H | 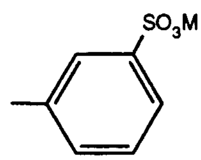 | Na | 1 |
| 5 | tert$C_4H_9$ | tert$C_4H_9$ | $C_2H_4$ | H | 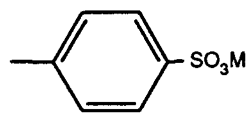 | Na | 1 |
| 6 | tert$C_4H_9$ | tert$C_4H_9$ | $C_2H_4$ | H | 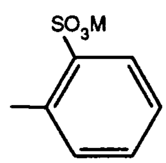 | Na | 1 |
| 7 | tert$C_4H_9$ | tert$C_4H_9$ | $C_2H_4$ | H | 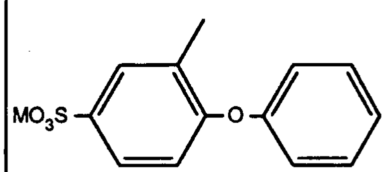 | Na | 1 |
| 8 | tert$C_4H_9$ | tert$C_4H_9$ | $C_2H_4$ | H | 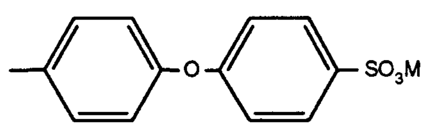 | Na | 1 |

Tabelle 1: (Fortsetzung)

| Verbindung Nr. | R | $R_1$ | X | $R_4$ | $Z-SO_3M$ | M | n |
|---|---|---|---|---|---|---|---|
| 9 | tert$C_4H_9$ | tert$C_4H_9$ | $C_2H_4$ | H | 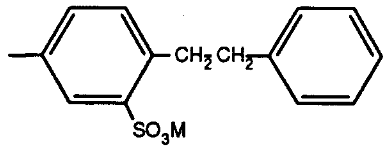 | 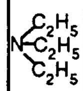 | 1 |
| 10 | tert$C_4H_9$ | tert$C_4H_9$ | $C_2H_4$ | H | 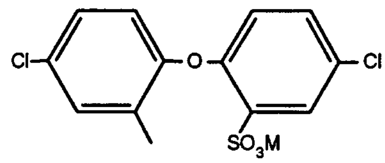 | Na | 1 |
| 11 | tert$C_4H_9$ | tert$C_4H_9$ | $C_2H_4$ | $CH_3$ | $-CH_2CH_2-SO_3M$ | Na | 1 |
| 12 | 2(tert$C_4H_9$) | 2(tert$C_4H_9$) | 2($C_2H_4$) | H | 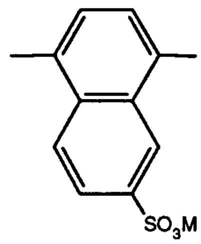 | Na | 2 |
| 13 | tert$C_4H_9$ | tert$C_4H_9$ | $C_2H_4$ | H | 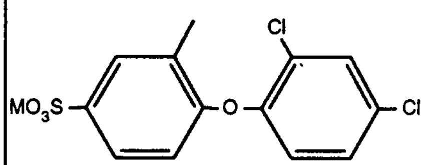 | Na | 1 |
| 14 | tert$C_4H_9$ | tert$C_4H_9$ | $C_2H_4$ | H | 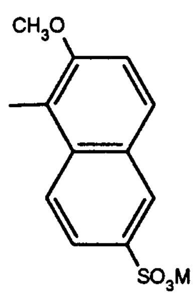 | Na | 1 |
| 15 | tert$C_4H_9$ | tert$C_4H_9$ | $C_2H_4$ | H | 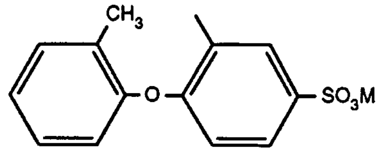 | Na | 1 |

Tabelle 1: (Fortsetzung)

| Verbindung Nr. | R | $R_1$ | X | $R_4$ | $Z-SO_3M$ | M | n |
|---|---|---|---|---|---|---|---|
| 16 | tert$C_4H_9$ | tert$C_4H_9$ | $C_2H_4$ | H | 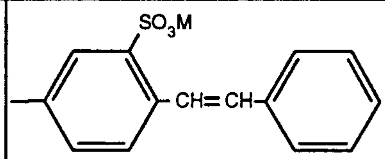 | Na | 1 |
| 17 | tert$C_4H_9$ | tert$C_4H_9$ | $C_2H_4$ | H | 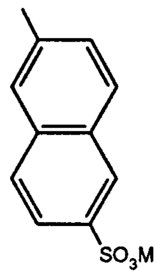 | Na | 1 |
| 18 | tert$C_4H_9$ | tert$C_4H_9$ | $CH_2$ | H | 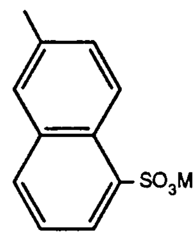 | Na | 1 |
| 19 | tert$C_4H_9$ | tert$C_4H_9$ | $C_2H_4$ | $C_2H_5$ | 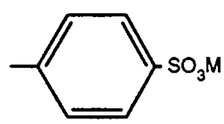 | Na | 1 |
| 20 | tert$C_4H_9$ | tert$C_4H_9$ | $C_2H_4$ | H | 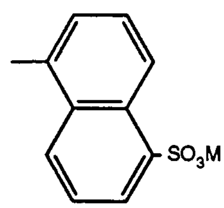 | Na | 1 |
| 21 | tert$C_4H_9$ | $CH_3$ | $C_2H_4$ | H | 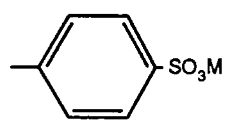 | Na | 1 |
| 22 | tert$C_4H_9$ | tert$C_4H_9$ | $C_2H_4$ | H | 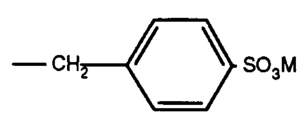 | Na | 1 |

Die Verbindungen der Formel (I) werden üblicherweise aus wässrigem Bad appliziert. Die Applikation kann vor, während oder nach dem optischen Aufhellen der Fasern, nach einem Auszieh- oder Kontinueverfahren erfolgen. Die Applikation gemeinsam mit dem optischen Aufheller ist bevorzugt.

Beim Ausziehverfahren kann man 0,01 bis 1%, vorzugsweise 0,05 bis 0,5%, optischen Aufheller und 0,01 bis 2%, vorzugsweise 0,05 bis 0,5% der Verbindungen der Formel (I) einsetzen.

Beim Kontinueverfahren kann man 0,1 bis 5 g/l, vorzugsweise 0,2 bis 2 g/l, optischen Aufheller und 0,1 bis 10 g/l, vorzugsweise 0,2 bis 2 g/l der Verbindungen der Formel (I) einsetzen.

Unter Polyamidmaterial wird synthetisches Polyamid, wie z.B. Polyamid-6, Polyamid-6,6 oder Polyamid-12, sowie modifiziertes Polyamid, z.B. basisch anfärbbares Polyamid verstanden. Neben den reinen Polyamidfasern kommen vor allem auch Fasermischungen aus Polyurethan und Polyamid in Betracht, so z.B. Trikotmaterial aus Polyamid/Polyurethan im Mischungsverhältnis 70:30. Grundsätzlich kann das reine oder gemischte Polyamidmaterial in den verschiedensten Verarbeitungsformen vorliegen, wie z.B. als Faser, Garn, Gewebe, Gewirke, Vlies oder Flormaterial.

Für polyamidhaltige Materialien geeignete optische Aufheller sind z.B. solche der allgemeinen Formeln (X) bis (XVI).

Bis-triazolyl-stilbene der allgemeinen Formel (X)

(X) 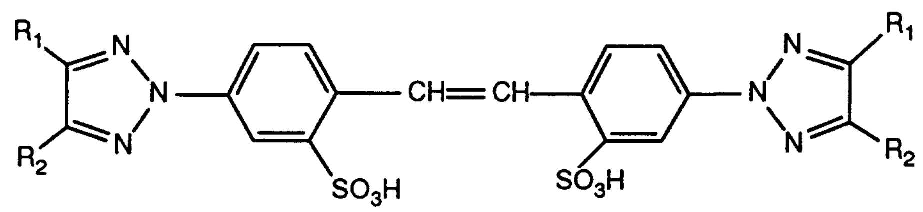

sowie deren z.B. Alkalimetall-Salze,
worin die Reste $R_1$, $R_2$, $R_3$ und $R_4$ unabhängig voneinander z.B.
H, $C_1$-$C_6$-Alkyl, Phenyl oder mit beispielsweise Sulfonsäuregruppen substituiertes Phenyl bedeuten können.

Bis-triazinylamino-stilbene der allgemeinen Formel (XI)

(XI) 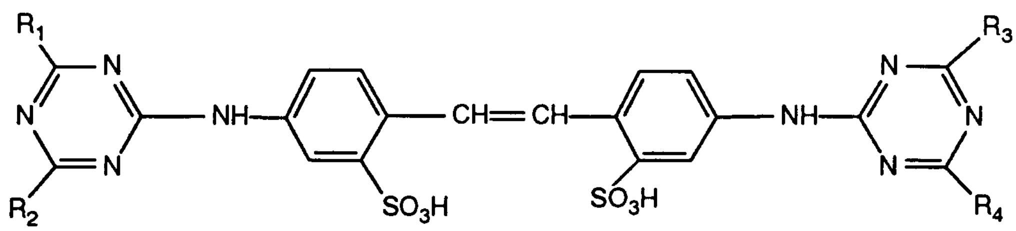

sowie deren z.B. Alkalimetall-Salze,
worin die Reste $R_1$, $R_2$, $R_3$ und $R_4$ unabhängig voneinander z.B.

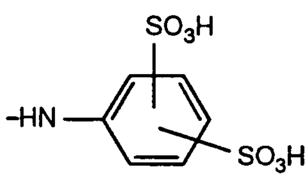 , 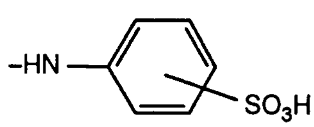 , 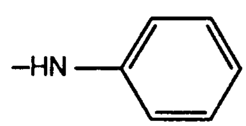 ,

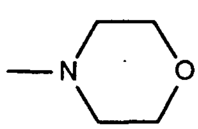 ,

-N-($C_1$-$C_6$-hydroxyalkyl)$_2$, -N-($C_1$-$C_6$-alkyl)($C_1$-$C_6$-hydroxyalkyl), -$NH_2$, -N-($C_1$-$C_6$-alkyl)$_2$, $C_1$-$C_6$-alkoxy, Cl, -NH-($C_1$-$C_6$-alkylsufonsäure) oder -NH-($C_1$-$C_6$-hydroxyalkyl)
bedeuten können.

Distyryl-biphenyle der allgemeinen Formel (XII)

(XII) 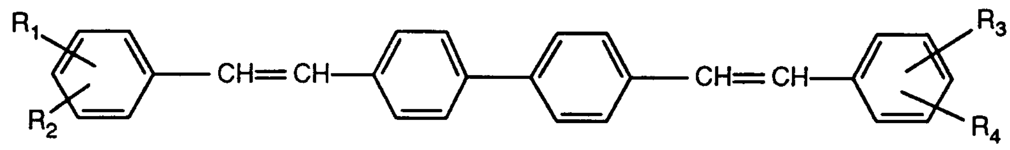

sowie deren z.B. Alkalimetall-Salze,
worin die Reste $R_1$, $R_2$, $R_3$ und $R_4$ unabhängig voneinander z.B.
H, Sulfonyl bzw. Sulfinat, $-SO_2N(C_1-C_6\text{-alkyl})_2$, $-OCH_3$, $-CN$, $-Cl$, $-COOCH_3$ oder $-CON(C_1-C_6\text{-alkyl})_2$ bedeuten können.

Bis-benzoxazolyl-derivate der allgemeinen Formel (XIII)

(XIII) 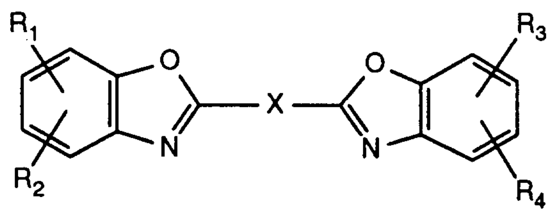

worin die Reste $R_1$, $R_2$, $R_3$ und $R_4$ unabhängig voneinander z.B.
H, $C_1$-$C_6$-alkyl, tert.-Butyl, tert.-Butyl-Phenyl oder $-COOC_1$-$C_6$-alkyl und

X z.B. 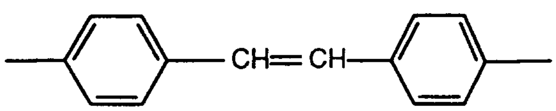 , 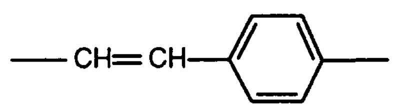 ,

$-CH=CH-$ , 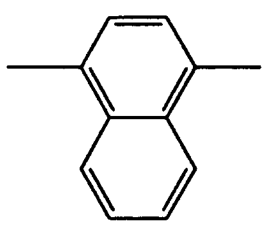 , oder 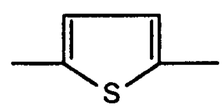

bedeuten können.

Coumarine der allgemeinen Formel (XIV)

(XIV) 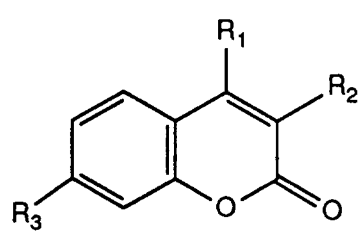

sowie deren z.B. Alkalimetall-Salze,
worin die Reste
$R_1$ z.B. H, $C_1$-$C_6$-alkyl oder $C_1$-$C_6$-carbonsäure,
$R_2$ z.B. H, Phenyl, Carboxyl-$C_1$-$C_6$-alkyl oder

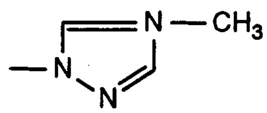

und

R3 z.B. 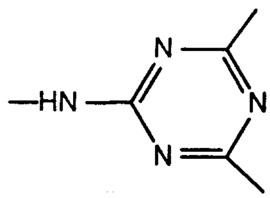 , 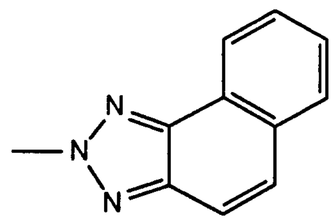 , 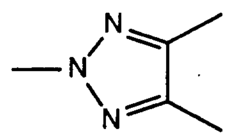 ,

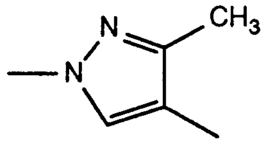 ,

-O-($C_1$-$C_6$-alkyl), -N($C_1$-$C_6$-alkyl)$_2$ oder -NH-CO-($C_1$-$C_6$-alkyl) bedeuten können.

Pyrazoline der allgemeinen Formel (XV)

(XV) 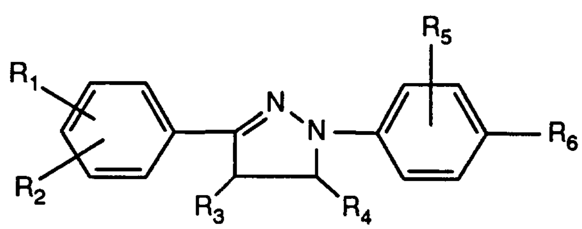

sowie deren z.B. Alkalimetail-Salze,
worin die Reste
$R_1$ z.B. H, Cl oder Amin (einschliesslich substituierte Amine),
$R_2$ z.B. H, Cl, Sulfonyl bzw. Sulfinat (einschliesslich der Derivate wie z.B. Sulfonylamid) oder Carboxy-$C_1$-$C_6$-alkyl,
$R_3$ und $R_4$ unabhängig voneinander z.B. H oder $C_1$-$C_6$-alkyl und
$R_5$ z.B. H oder Cl bedeuten.

Dibenzofuranyl-biphenyle der allgemeinen Formel (XVI)

(XVI) 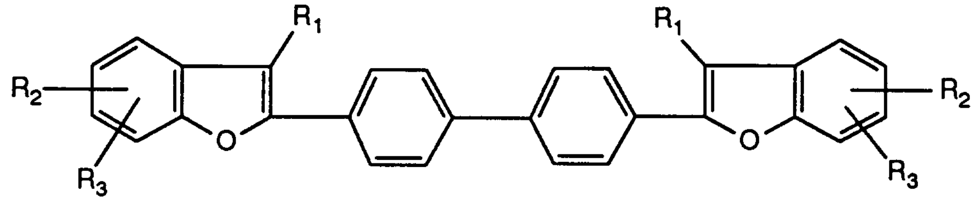

sowie deren z.B. Alkalimetall-Salze,
worin die Reste $R_1$, $R_2$ und $R_3$ unabhängig voneinander z.B.
H, Halogen, CN, Phenoxy, Benzyloxy, $C_1$-$C_4$-alkyl, $C_1$-$C_4$-alkoxy oder einen Sulfonsäurerest bedeuten können.

Die vorgenannten Aufheller sind bekannt und ihre Herstellung ist in der Literatur vielfach beschrieben.

Als für das Verfahren geeignete Farbstoffe kommen alle die zum Färben der oben genannten Textilien geeigneten Farbstoffe wie Azo-, Anthrachinon-, Nitro,- Acridon-, oder Naphthochinonfarbstoffe in Frage.

Beansprucht wird eine Verfahren zur Verbesserung der Mouldingechtheit von optisch aufgehellten Textilien.

Ein weiterer Gegenstand der vorliegenden Erfindung ist ein Mittel zum optischen Aufhellen von polyamidfaserhaltigen Artikeln mit verbesserten Mouldingechtheiten. Ein solches Mittel, welches aus einem Bad appliziert werden kann, enthält ein gehindertes Phenol der Formel (I), einen optischen Aufheller für Polyamid (bzw. eine Mischung derselben),für den Fall der gefärbten Textilien einen oder mehrere Farbstoffe, sowie gegebenenfalls übliche Hilfsstoffe. Bevorzugt sind Mittel enthaltend ein gehindertes Phenol der Formel (I), besonders bevorzugt solche der Formel (VII), und einen optischen Aufheller der Formeln (X)-(XV). Das Verhältnis des Phenols zum optischen Aufheller kann im Bereich von 100:1 bis 1:50 liegen, wobei ein Verhältnis von 5:1 bis 1:5 bevorzugt ist.

Die Herstellung des Mittels zum optischen Aufhellen von polyamidfaserhaltigen Artikeln mit verbesserten Mouldingechtheiten erfolgt durch Mischen der Komponenten, wobei dann auch allfällige Hilfsstoffe eingearbeitet werden können.

Übliche Hilfsstoffe sind z.B. Dispergier-, Egalisier- und Waschmittel, wie Fettalkoholpolyglykolether, Alkylethoxylate oder Alkylphenolethoxylate, anionische Alkylbenzolsulfonate oder lineare Alkylsulfonate, allein oder kombiniert mit Benzimidazol-derivaten oder oxyethylierten Fettaminen, sowie Sequestriermittel, wie Na-Salz der Ethylendiamintetraessigsäure, oder Bleichmittel, wie Na-dithionit, sowie Kombinationen von zwei oder mehreren Hilfsmitteln.

Die abschliessende Formgebung (Moulding) der Textilien erfolgt nach den üblichen Verfahrensweisen.

Die folgenden Beispiele veranschaulichen die Erfindung ohne sie jedoch hierauf beschränken zu wollen. Teile bedeuten Gewichtsteile und Prozente Gewichtsprozente, welche auf das Textilgewicht bezogen sind.

In den folgenden Beispielen wird als Textil ein PA-6 Texturtrikot verwendet. Der Aufheller und das sterisch gehinderte Phenol werden im Ausziehverfahren appliziert, wobei dem Behandlungsbad noch 3 g/l stabilisiertes Hydrosulfit (Clarit PS) zugegeben werden. Die Behandlungsdauer beträgt 30 min bei einer Temperatur von 120 °C.

Die Bestimmung des Weissgrades erfolgt nach der Methode nach Ganz (Ganz, Appl. Optics 18, 1073-1078 (1979)) mit Hilfe eines Zeiss RFC 3 Spektrometers.

Beispiel 1:

Es werden die Verbindungen (4), (5), (7), (8) und (10) (siehe Tabelle 1) bei Konzentrationen von jeweils 0,5% appliziert. Der Weissgrad beträgt 70 bis 80 Einheiten.

Beispiel 2:

Es wird der Aufheller der Formel

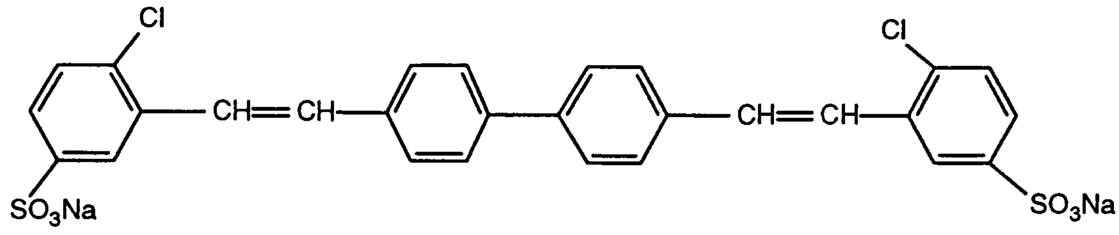

bei einer Konzentration von 0,2% appliziert. Der Weissgrad beträgt 270 Einheiten. Eine Hälfte des Textilstückes wird dann dem Mouldingtest unterzogen:

Bei einem "Rhodiaceta Thermotester" (Firma Setaran, Lyon/F) mit 13 heizbaren Metallplättchen à 15*35 mm wird die Temperatur eines der mittleren Plättchen auf 199 °C eingestellt. Der untere Sockel wird mit einer ca. 3 mm dicken Wollfilzunterlage überzogen. Das Textilstück wird während einer Minute gepresst (Pressdruck ca. 70 g/cm$^2$) und dann wieder auf seinen Weissgrad untersucht.

Nach dem Mouldingtest beträgt der Weissgradverlust etwa 70 Einheiten.

Beispiel 3:

Es werden der Aufheller (Konzentration 0,2%) aus Beispiel 2 und jeweils eine der Verbindungen (4), (5), (7), (8), (10), (21), und (22) (siehe Tabelle 1) (Konzentration 0,5%) gemeinsam appliziert. Anschliessend wird jedes Textilstück dem Mouldingtest (199 °C, 1 Min.) unterworfen.
Die Ergebnisse zeigt die folgende Tabelle 2.

Beispiel 3a:

Es wird der Aufheller (Konzentration 0,2%) aus Beispiel 2 und die Verbindung (23) in einer Konzentration von 0,1% gemeinsam appliziert. Anschliessend wird jedes Textilstück dem Mouldingtest (199 °C, 1 Min.) unterworfen.
Weissgrad : 271
Mouldingtest Weissgradverlust : -24

Tabelle 2:

| Nr. | Verbindung | Weiss-grad | Moulding Test Weissgrad-Verlust |
|---|---|---|---|
| (4) | 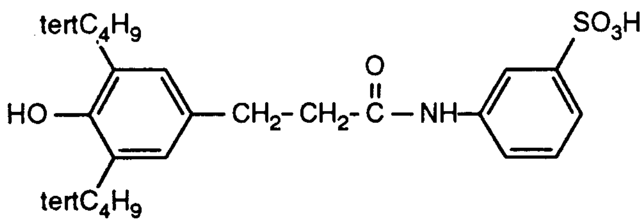 | 274 | -31 |
| (5) | 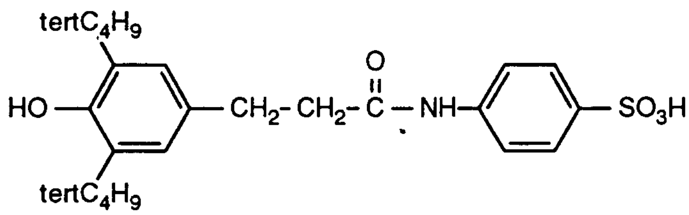 | 272 | -29 |
| (7) | 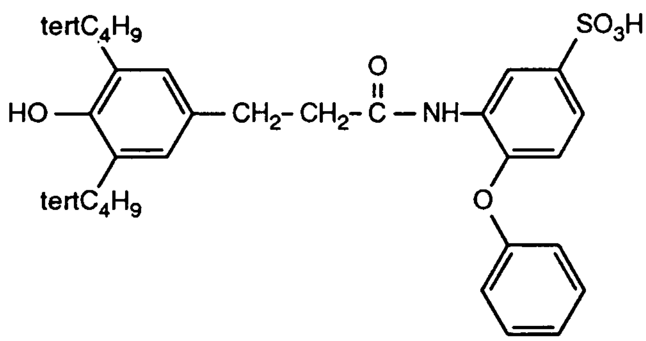 | 265 | -35 |
| (8) | 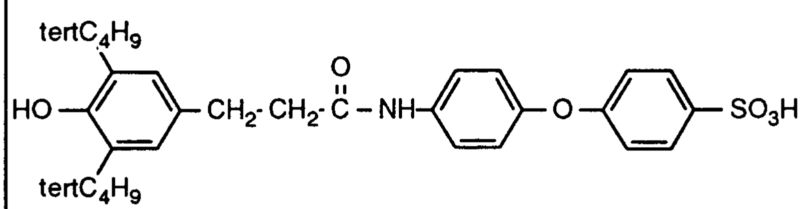 | 275 | -19 |

Tabelle 2 : (Fortsetzung)

| Nr. | Verbindung | Weiss-grad | Moulding Test Weissgrad-Verlust |
|---|---|---|---|
| (10) | 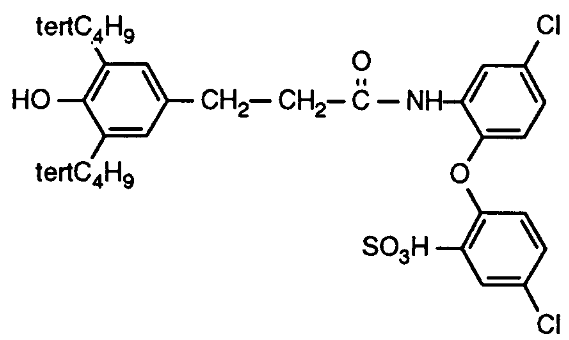 | 262 | -32 |
| (21) | 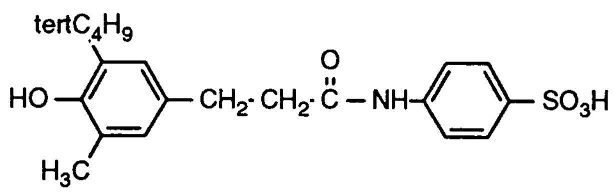 | 273 | -37 |
| (22) | 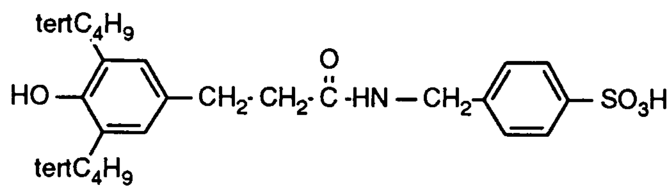 | 272 | -31 |

Gleichwertige Ergebnisse werden erzielt, bei der Verwendung der folgenden Verbindung :

Tabelle 2 : (Fortsetzung)

| Nr. | Verbindung | Weiss-grad | Moulding Test Weissgrad-Verlust |
|---|---|---|---|
| (23) | 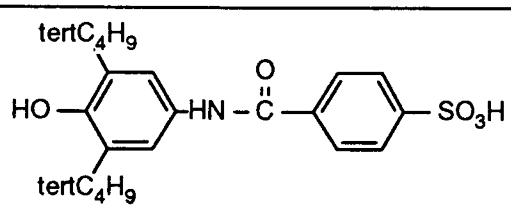 | 263 | -19 |

Beispiel 4:

Es werden der Aufheller der Formel (A), (B), (C), (D) und (E) (siehe Tabelle 3) in einer Konzentration von 0,2% dem Mouldingtest (199 °C, 1 Min.) unterworfen. Ferner wird jeweils ein Aufheller der Formel (A),

(B), (C), (D) und (E) in einer Konzentration von 0,2% und die Verbindungen (5) (siehe Tabelle 1)

(5) 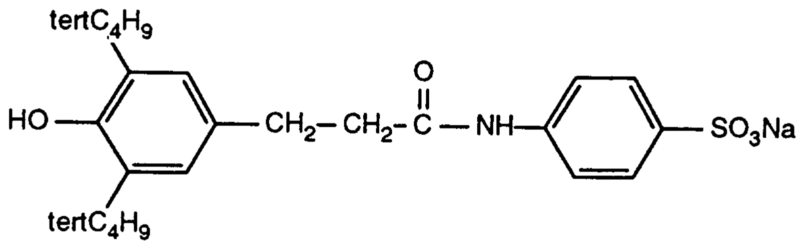

bei einer Konzentration von 0,5% gemeinsam appliziert. Anschliessend wird jedes Textilstück dem Mouldingtest (199 °C, 1 Min.) unterworfen.
Die Ergebnisse zeigt die folgende Tabelle 3.

Tabelle 3:

| Nr. | Verbindung | gehindertes Phenol | Moulding Test Weissgradverlust |
|---|---|---|---|
| (A) | 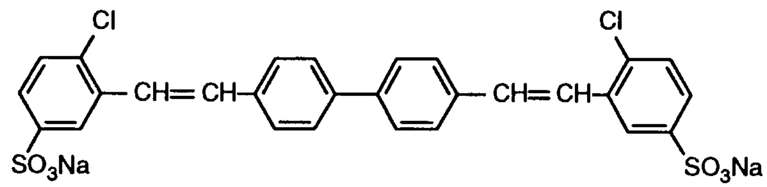 | 0 %<br>0,1 % | -70<br>-25 |
| (B) | 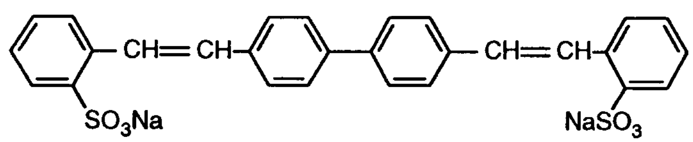 | 0 %<br>0,1 % | -70<br>-24 |
| (C) | 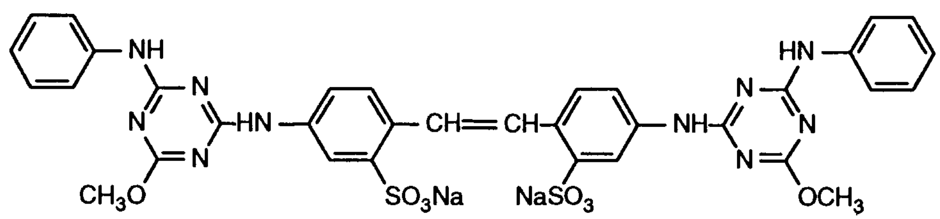 | 0 %<br>0,1 % | -50<br>-12 |

Tabelle 3 : (Fortsetzung)

| Nr. | Verbindung | gehindertes Phenol | Moulding Test Weissgradverlust |
|---|---|---|---|
| (D) | 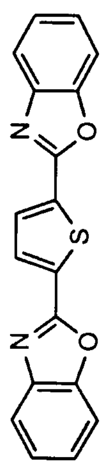 | 0 % | -39 |
| | | 0,1 % | -11 |
| (E) | 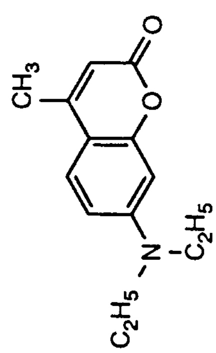 | 0 % | -62 |
| | | 0,1 % | -35 |

Beispiel 5:

Es werden 2 Muster à 20 g einer PA66-Meterware in einem Färbeapparat bei einem Flottenverhältnis von 1:15 gefärbt. Die Behandlungsbäder enthalten 2% Ammoniumsulfat, 0,05% eines nichtionischen

Tensides (z.B. das Umsetzungsprodukt von Nonylphenol mit 9,5 Mol Ethylenoxid), 0,3% des optischen Aufhellers der Formel (XX)

(XX) 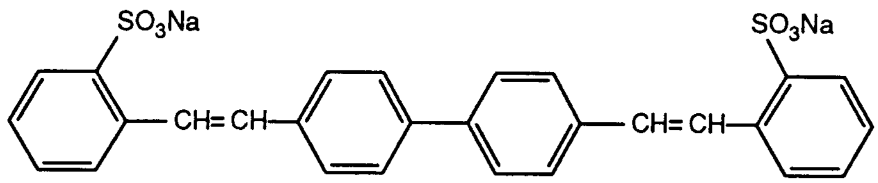

0,05 % des hellvioletten Farbstoffes der Formel (XXI)

(XXI) 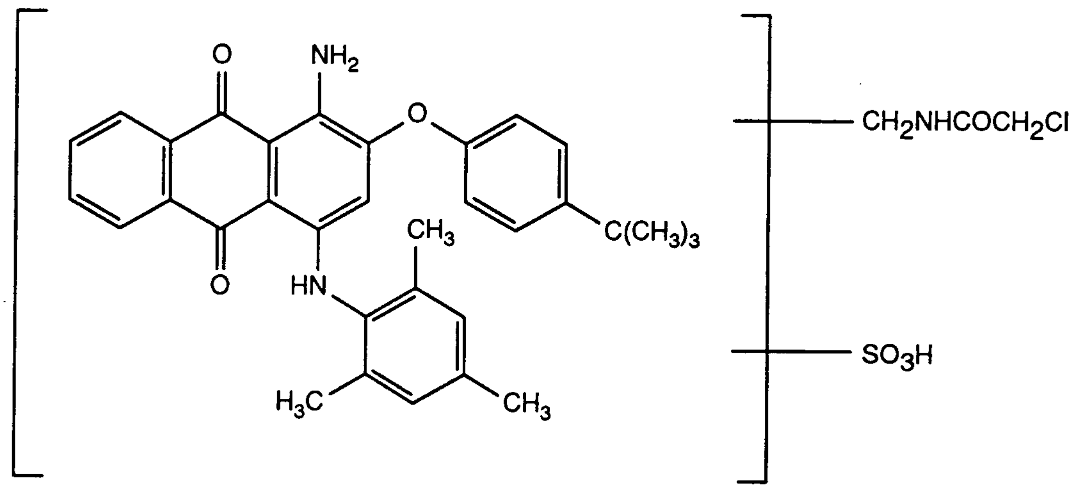

und 0,75 % des gehinderten Phenoles der Formel (5).

Die Prozentzahlen beziehen sich jeweils auf das Gewicht des Fasermateriales. Das Textilgewebe wird darin 10 Minuten bei 40 °C behandelt, dann innerhalb von 20 Minuten auf 90 °C erhitzt und dort weitere 10 Minuten gefärbt. Danach wird 1% einer 80%$^{igen}$ Essigsäure zugegeben, nach 10 Minuten auf 60 °C abgekühlt, kalt gespühlt und getrocknet. Das so erhaltene Textilgewebe ist hellviolett gefärbt und wird, wie in Beispiel 1 beschrieben, dem Mouldingtest unterzogen. Als Vergleichsprobe dient ein nach dem gleichen Verfahren gefärbtes Textilgewebe bei dem nur auf den Zusatz des gehinderten Phenoles verzichtet wurde. Die Farbstoffdifferenz wurde danach mit der Lichtart D 65/10 nach Cielar 1967/DIN 6174 bestimmt (Tabelle 4).

Tabelle 4

| Farbmetr. Grössen | mit gehindertem Phenol | ohne gehindertem Phenol |
|---|---|---|
| dL | -0,83 | -1,38 |
| da | -2,05 | -3,02 |
| db | 1,93 | 3,79 |
| dc(ab) | -2,54 | -4,62 |
| dH(ab) | -1,22 | -1,44 |
| dE(ab) | 2,94 | 5,04 |

Beispiel 6:

Die in Beispiel 5 beschriebene Färbeflotte enthält 0,3% eines optischen Aufhellers mit der Formel (XX), 0,02% des Farbstoffes der Formel (XXI), 0,03% des Farbstoffes mit der Formel (XXII)

(XXII)

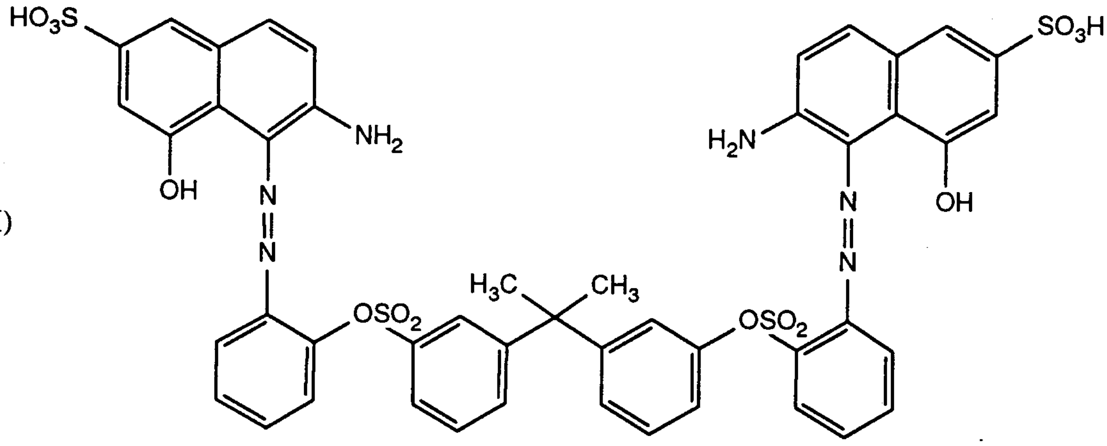

und 0,75% des Na-Salzes des gehinderten Phenoles (9). Es wird eine hochbrilliante rosa Färbung erzielt.

Die Auswertung der Farbstoffdifferenz wird wie in Beispiel 5 beschrieben durchgeführt und führt zu folgenden Ergebnissen (Tabelle 5).

Tabelle 5

| Farbmetr. Grössen | mit gehindertem Phenol | ohne gehindertem Phenol |
|---|---|---|
| dL | 0,34 | -0,08 |
| da | -2,25 | -3,18 |
| db | 1,60 | 2,54 |
| dc(ab) | -2,62 | -3,91 |
| dH(ab) | -0,85 | -1,16 |
| dE(ab) | 2,79 | 4,08 |

## Patentansprüche

1. Verfahren zur Herstellung von geformten polyamidfaserhaltigen Textilien mit verbesserten Mouldingechtheiten, dadurch gekennzeichnet, dass man vor, während oder nach dem optischen Aufhellen und gegebenfalls Färben der Fasern eine Verbindung der Formel

   (I) $(A\text{-}Y\text{-})_nZ(\text{-}W)_m$

   in welcher A den Rest eines sterisch gehinderten Phenols der Benzolreihe, Y einen Rest der Formeln (II) oder (III)

   (II) 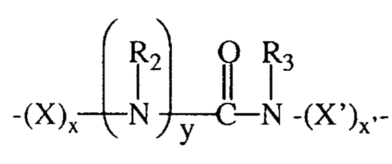

   (III) 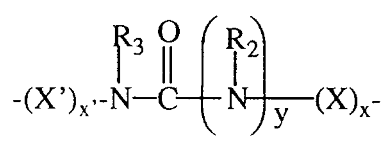

   worin

   X und X' unabhängig voneinander Alkylen, Oxaalkylen oder Thiaalkylen,

   $R_2$ und $R_3$ unabhängig voneinander Wasserstoff oder eine gegebenenfalls substituierte Alkyl- oder Arylgruppe und

x, x' und y unabhängig voneinander je 0 oder 1 sind,
Z einen aliphatischen oder einen carbocyclischen aromatischen Rest, wobei letzterer höchstens zwei mono- oder bicyclische Kerne enthält,
W die Sulfogruppe und
m und n unabhängig voneinander 1 oder 2 bedeuten, und deren wasserlösliche Salze, auf die Fasern aufbringt und anschliesslich die so behandelten Textilien formt.

2. Verfahren gemäss Anspruch 1, dadurch gekennzeichnet, dass man eine Verbindung der Formel (I) verwendet, worin A einen Monohydroxyphenyl-Rest bedeutet, in dem mindestens eine o-Stellung zur Hydroxylgruppe durch Alkyl mit 1-12 C-Atomen, Cycloalkyl mit 6-10 C-Atomen oder Aralkyl mit 7-10 C-Atomen substituiert ist und der gegebenenfalls noch weitere Substituenten trägt.

3. Verfahren gemäss einem der Ansprüche 1 und 2, dadurch gekennzeichnet, dass man eine Verbindung der Formel (I) verwendet, worin A einen Rest der Formel (IV)

(IV) 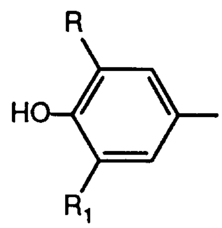

in der
R und $R_1$ unabhängig voneinander Wasserstoff, Methyl oder tert.Butyl darstellen und die Summe der Kohlenstoffatome von R und $R_1$ mindestens 2 beträgt, bedeutet.

4. Verfahren gemäss einem der Ansprüche 1 bis 3, worin in den Verbindungen der Formeln (II) und (III) X und X' geradkettiges oder verzweigtes Alkylen mit 1-8 C-Atomen bedeuten.

5. Verfahren gemäss einem der Ansprüche 1 bis 4, worin in den Verbindungen der Formeln (II) und (III) $R_2$ und $R_3$ geradkettiges oder verzweigtes $C_1$-$C_8$-Alkyl bedeuten.

6. Verfahren gemäss einem der Ansprüche 1 und 4, worin in den Verbindungen der Formeln (II) und (III) $R_2$ und $R_3$ Hydroxyalkyl, Alkoxyalkyl, Aminoalkyl, Alkylaminoalkyl oder Dialkylaminoalkyl je mit insgesamt 2-10 C-Atomen oder Phenyl bedeuten.

7. Verfahren gemäss Anspruch 1, worin in Formel (I) Y einen Rest der Formel (V)

(V) 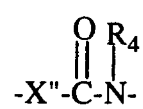

darstellt, worin
$R_4$ Wasserstoff oder $C_1$-$C_4$-Alkyl und
X" $C_1$-$C_4$-Alkylen bedeuten.

8. Verfahren gemäss einem der Ansprüche 1 bis 7, dadurch gekennzeichnet, dass Z in Formel (I) den Rest eines unsubstituierten oder durch Carboxylgruppen substituierten Alkans mit mindestens 2 C-Atomen, den Rest eines unsubstituierten oder durch Chlor oder Brom, $C_1$-$C_4$-Alkyl, $C_1$-$C_4$-Alkoxy, $C_1$-$C_4$-Alkoxycarbonylamino, Hydroxy, Carboxy, Phenylethyl, Styryl, Phenyl, Phenoxy, Phenylthio, Phenylsulfonyl oder Acylamino substituierten Benzolkernes, wobei die Gruppe W direkt an diesen Benzolkern oder an einen monocyclischen Arylrest eines seiner Substituenten gebunden sein kann, oder es den Naphthalin- oder Tetralinrest bedeutet.

**9.** Verfahren gemäss Anspruch 1, dadurch gekennzeichnet, dass man eine Verbindung der Formel (VII)

(VII) 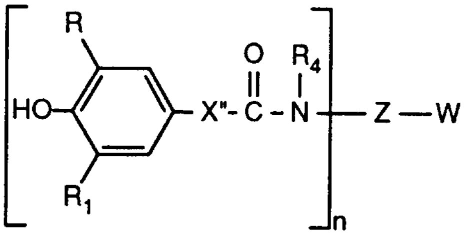

verwendet, worin
R und $R_1$ unabhängig voneinander Methyl oder tert.Butyl,
$R_4$ Wasserstoff oder $C_1$-$C_4$-Alkyl,
X'' $C_1$-$C_4$-Alkylen,
Z den Ethylenrest, einen zwei- oder dreiwertigen Rest des Benzols oder Naphthalins oder einen zweiwertigen Rest des Diphenylethers,
W die Sulfogruppe und
n 1 oder 2 bedeuten.

**10.** Verfahren gemäss Anspruch 9, dadurch gekennzeichnet, dass man Verbindungen der Formel (VII) verwendet, worin R und $R_1$ tert.-Butyl, X'' Methylen oder Ethylen, $R_4$ Wasserstoff, Methyl oder Ethyl und Z Ethylen, o-, m- oder p-Phenylen, 1,4-Naphthylen, 1,8-Naphthylen, 2-Methoxy-1,6-Naphthylen, 1,5-Naphthylen, 2,5-Naphthylen, 2,6-Naphthylen, 1,4,6-Naphthalintriyl oder die Reste

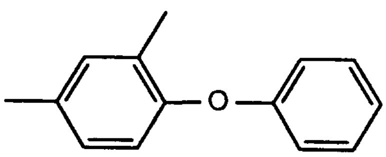 , 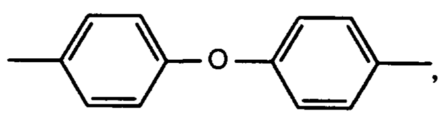 ,

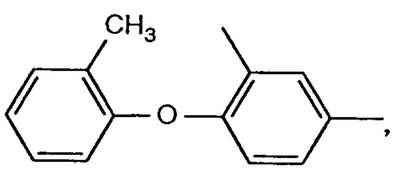 , 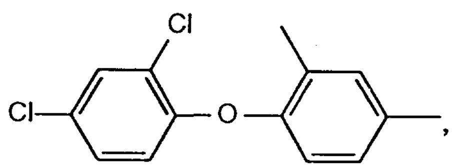 ,

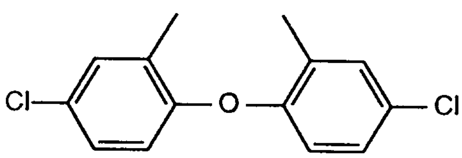 , 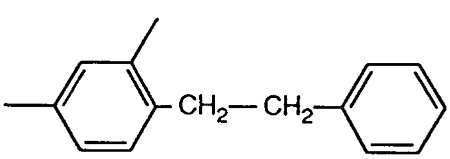 oder

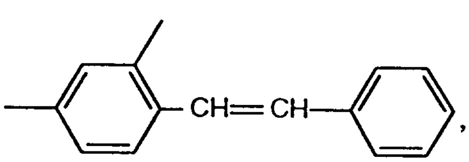 ,

worin die Sulfogruppe W in Form ihrer Alkali- oder Ammoniumsalze vorliegt.

**11.** Verfahren gemäss einem der Ansprüche 1-10, dadurch gekennzeichnet, dass man als optischen Aufheller einen Aufheller mit der Grundstruktur eines Bis-triazinylamino-stilbenes, Bis-triazolyl-stilbenes, Distyryl-biphenyls, Bis-benzoxazolyl-derivates, Coumarines oder Pyrazolines verwendet,

12. Verfahren gemäss Ansprüch 11, dadurch gekennzeichnet, dass man eine Mischung aus einen, optischen Aufheller und ein oder mehreren Farbstoffen wie Azo-, Anthrachinon-, Nitro,- Acridon-, oder Naphthochinonfarbstoffen verwendet.

13. Verfahren gemäss einem der Ansprüche 1-12, dadurch gekennzeichnet, dass man eine Verbindung der Formel (I) in Konzentrationen von 0,01 bis 2% beim Ausziehverfahren bzw. in einer Menge von 0,1 bis 10 g/l beim Kontinueverfahren verwendet.

14. Verfahren gemäss Anspruch 13, dadurch gekennzeichnet, dass man eine Verbindung der Formel (I) in Konzentrationen von 0,05 bis 0,5% beim Ausziehverfahren bzw. in einer Menge von 0,2 bis 2 g/l beim Kontinueverfahren verwendet.

15. Die gemäss dem Verfahren nach Anspruch 1 behandelten geformten polyamidfaserhaltigen textilien mit verbesserten Mouldingechtheiten.

## Claims

1. A process for the production of moulded polyamide fibre-containing articles having improved moulding fastness properties, which comprises applying a compound of the formula

(I) $(A\text{-}Y\text{-})_n Z(\text{-}W)_m$

in which A is the radical of a sterically hindered phenol from the benzene series, Y is a radical of the formula (II) or (III)

(II) 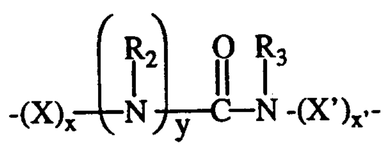

(III) 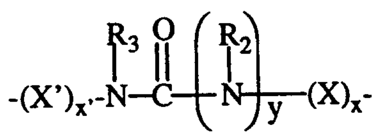

in which X and X', independently of one another, are alkylene, oxaalkylene or thiaalkylene, $R_2$ and $R_3$, independently of one another, are hydrogen or a substituted or unsubstituted alkyl or aryl group. and x, x' and y, independently of one another, are each 0 or 1, Z is an aliphatic or carbocyclic aromatic radical, the latter containing a maximum of two monocyclic or bicyclic rings, W is the sulfo group, and m and n, independently of one another, are 1 or 2, or a water-soluble salt thereof, to the fibres before, during or after the optical whitening and, if appropriate, dyeing of the fibres, and subsequently moulding the textiles thus treated.

2. A process according to claim 1, wherein a compound of the formula (I) is used in which A is a monohydroxyphenyl radical in which at least one o-position to the hydroxyl group is substituted by alkyl having 1 -12 carbon atoms, cycloalkyl having 6-10 carbon atoms or aralkyl having 7-10 carbon atoms, and which may also carry further substituents.

3. A process according to either of claims 1 and 2, wherein a compound of the formula (I) is used in which A is a radical of the formula (IV)

(IV) 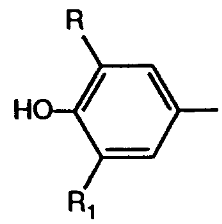

in which R and $R_1$, independently of one another, are hydrogen, methyl or tert-butyl, and the total number of carbon atoms in R and $R_1$ is at least 2.

**4.** A process according to any one of claims 1 to 3, in which X and X' in the compounds of the formulae (II) and (III) are straight-chain or branched alkylene having 1-8 carbon atoms.

**5.** A process according to any one of claims 1 to 4, in which $R_2$ and $R_3$ in the compounds of the formulae (II) and (III) are straight-chain or branched $C_1$-$C_8$alkyl.

**6.** A process according to either of claims 1 and 4, in which $R_2$ and $R_3$ in the compounds of the formulae (II) and (III) are hydroxyalkyl, alkoxyalkyl, aminoalkyl, alkylaminoalkyl or dialkylaminoalkyl$_1$ in each case having a total of 2-10 carbon atoms, or phenyl.

**7.** A process according to claim 1, in which Y in the formula (I) is a radical of the formula (V)

(V) 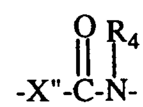

in which $R_4$ is hydrogen or $C_1$-$C_4$alkyl, and X'' is $C_1$-$C_4$alkylene.

**8.** A process according to any one of claims 1 to 7, wherein Z in the formula (I) is the radical of an unsubstituted or carboxyl-substituted alkane having at least 2 carbon atoms, the radical of a benzene ring which is unsubstituted or substituted by chlorine, bromine, $C_1$-$C_4$alkyl, $C_1$-$C_4$alkoxy, $C_1$-$C_4$alkoxycarbonylamino, hydroxyl, carboxyl, phenylethyl, styryl, phenyl, phenoxy, phenylthio, phenylsulfonyl or acylamino, it being possible for the group W to be bonded directly to this benzene ring or to a monocyclic aryl radical of one of its substituents, or is the naphthalene or tetralin radical.

**9.** A process according to claim 1, wherein a compound of the formula (VII)

(VII) 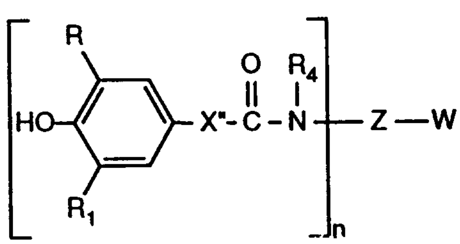

in which R and $R_1$, independently of one another, are methyl or tert-butyl, $R_4$ is hydrogen or $C_1$-$C_4$alkyl, X'' is $C_1$-$C_4$alkylene, Z is the ethylene radical, a divalent or trivalent radical of benzene or naphthalene, or a divalent radical of diphenyl ether, W is the sulfo group and n is 1 or 2,
is used.

**10.** A process according to claim 9, wherein a compound of the formula (VII) is used in which R and $R_1$ are tert-butyl, X'' is methylene or ethylene, $R_4$ is hydrogen, methyl or ethyl, and Z is ethylene, o-, m- or p-phenylene, 1,4-naphthylene, 1,8-naphthylene, 2-methoxy-1,6-naphthylene,1,5-naphthylene, 2,5-naphthylene, 2,6-naphthylene, 1,4,6-naphthalenetriyl or one of the radicals

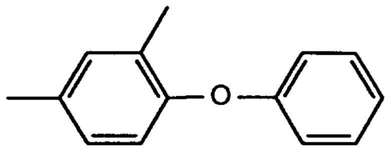 , 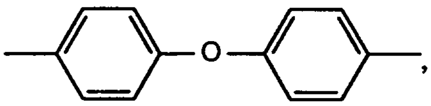 ,

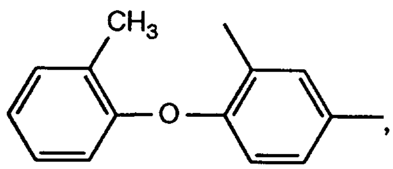 , 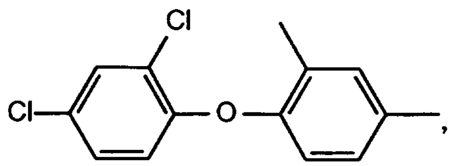 ,

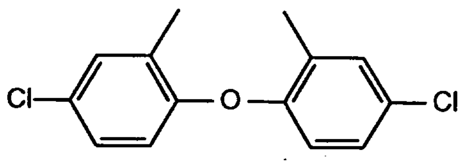 , 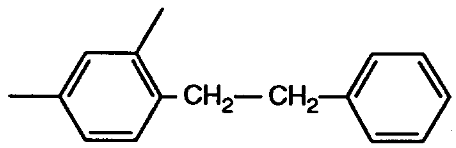 or

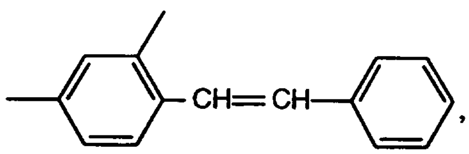 ,

in which the sulfo group W is in the form of its alkali metal or ammonium salt.

**11.** A process according to any one of claims 1-10, wherein the optical whitener used is a whitener having the basic structure of a bistriazinylaminostilbene, bistriazolylstilbene, distyrylbiphenyl, bisbenzoxazolyl derivative, coumarin or pyrazoline.

**12.** A process according to claim 11, wherein a mixture of an optical whitener and one or more dyes, such as azo, anthraquinone, nitro, acridone or naphthoquinone dyes, is used.

**13.** A process according to any one of claims 1-12, wherein a compound of the formula (I) in a concentration of from 0.01 to 2 % in the case of the exhaust process or in an amount of from 0.1 to 10 g/l in the case of the continuous process, is used.

**14.** A process according to claim 13, wherein a compound of the formula (I) is used in a concentration of from 0.05 to 0.5 % in the case of the exhaust process or in an amount of from 0.2 to 2 g/l in the case of the continuous process.

**15.** Moulded polyamide fibre-containing textiles having improved moulding fastness properties which have been treated by a process according to claim 1.

**Revendications**

**1.** Procédé pour la préparation de textiles moulés contenant des fibres en polyamide et présentant des solidités au moulage améliorées, caractérisé en ce que l'on applique sur les fibres, avant, pendant ou après l'application d'azurants optiques et la teinture éventuelle des fibres, un composé de formule

(I) $(A\text{-}Y\text{-})_n Z(\text{-}W)_m$

dans laquelle

A représente le résidu d'un phénol stériquement encombré de la série benzénique,

Y représente un résidu de formule (II) ou (III)

(II) 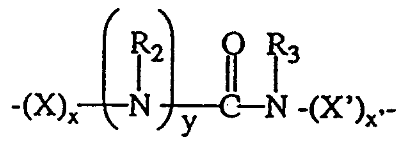

(III) 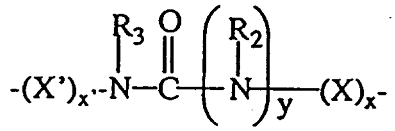

dans laquelle

X et X' représentent indépendamment l'un de l'autre un groupe alkylène, oxa-alkylène ou thia-alkylène,

$R_2$ et $R_3$ représentent indépendamment l'un de l'autre un atome d'hydrogène ou un groupe alkyle ou aryle éventuellement substitué, et

x, x' et y valent indépendamment l'un de l'autre 0 ou 1,

Z représente un résidu aliphatique ou carbocyclique aromatique, ce dernier contenant au plus deux noyaux mono- ou bicycliques,

W représente un groupe sulfo et

m et n valent indépendamment l'un de l'autre 1 ou 2, et les sels hydrosolubles d'un tel composé, puis en ce que l'on moule ensuite les textiles ainsi traités.

**2.** Procédé conforme à la revendication 1, caractérisé en ce que l'on utilise un composé de formule (I) dans lequel A représente un résidu phényle monohydroxylé dans lequel au moins une position en ortho par rapport au groupe hydroxyle porte un substituant alkyle en $C_{1-12}$, cycloalkyle en $C_{1-6}$, ou aralkyle en $C_{7-10}$, et qui peut porter en plus éventuellement d'autres substituants.

**3.** Procédé conforme à une des revendications 1 et 2, caractérisé en ce que l'on utilise un composé de formule (I) dans lequel A représente un résidu de formule (IV)

(IV) 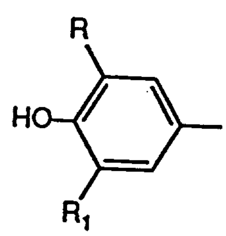

dans laquelle R et $R_1$ représentent indépendamment l'un de l'autre un atome d'hydrogène, un groupe méthyle ou ter-butyle, la somme des atomes de carbone de R et $R_1$ étant au moins égale à 2.

**4.** Procédé conforme à une des revendications 1 à 3 dans lequel, dans les composés de formule (II) et (III), X et X' représentent un groupe alkylène linéaire ou ramifié en $C_{1-8}$.

**5.** Procédé conforme à une des revendications 1 à 4 dans lequel dans les composés de formule (II) et (III), $R_2$ et $R_3$ représentent un groupe alkyle linéaire ou ramifié en $C_{1-8}$.

**6.** Procédé conforme à une des revendication 1 et 4 dans lequel dans les composés de formule (II) et (III), $R_2$ et $R_3$ représentent un groupe hydroxyalkyle, alcoxyalkyle, aminoalkyle, alkylaminoalkyle ou dialkylaminoalkyle comportant chacun en tout de 2 à 10 atomes de carbone ou un résidu phényle.

**7.** Procédé conforme à la revendication 1 dans lequel, dans la formule (I), Y représente un résidu de formule (V)

(V) 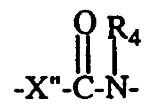

dans laquelle

$R_4$ représente un atome d'hydrogène ou un groupe alkyle en $C_{1-4}$ et

X" représente un groupe alkylène en $C_{1-4}$.

**8.** Procédé conforme à une des revendications 1 à 7, caractérisé en ce que Z dans la formule (I) représente le résidu d'un alcane comportant au moins deux atomes de carbone, non substitué ou substitué par des groupes carboxyle, le résidu d'un noyau benzénique non substitué ou substitué par un atome de chlore ou de brome, un groupe alkyle en $C_{1-4}$, alcoxy en $C_{1-4}$, alcoxycarbonylamino en $C_{1-4}$, hydroxy, carboxy, phényléthyle, styryle, phényle, phénoxy, phénylthio, phénylsulfonyle ou acylamino, le groupe W pouvant être lié directement au noyau benzénique ou à un résidu aryle monocyclique d'un des substituants, ou il représente un résidu naphtalène ou tétrahydronaphtalène.

**9.** Procédé conforme à la revendication 1, caractérisé en ce que l'on utilise un composé de formule (VII)

(VII) 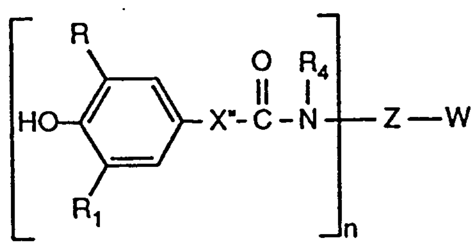

dans laquelle

R et $R_1$ représentent indépendamment l'un de l'autre un groupe méthyle ou ter-butyle,

$R_4$ représente un atome d'hydrogène ou un groupe alkyle en $C_{1-4}$,

X" représente un groupe alkylène,

Z représente un groupe éthylène, un résidu benzénique ou naphtalénique di- ou trivalent ou un résidu diphényléther divalent,

W représente le groupe sulfo et

n vaut 1 ou 2.

**10.** Procédé conforme à la revendication 9, caractérisé en ce que l'on utilise des composés de formule (VII) dans lesquels R et $R_1$ représente un groupe ter-butyle, X" représente un groupe méthylène ou éthylène, $R_4$ représente un atome d'hydrogène, un groupe méthyle ou éthyle et Z représente un groupe éthylène, o-, m- ou p-phénylène, 1,4-naphtylène, 1,8-naphtylène, 2-méthoxy-1,6-naphtylène, 1,5-naphtylène, 2,5-naphtylène, 2,6-naphtylène, naphtalène-1,4,6-triyle ou les résidus

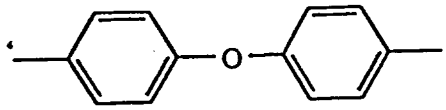
,
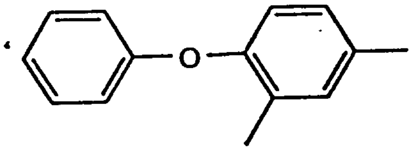

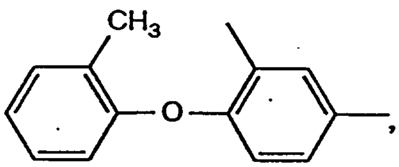
,
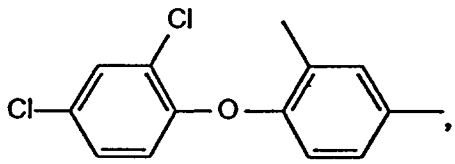
,

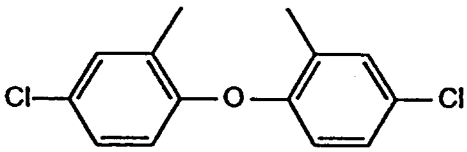
,
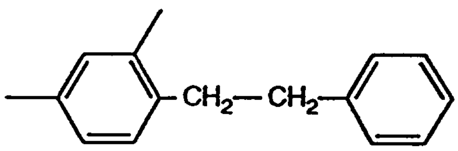

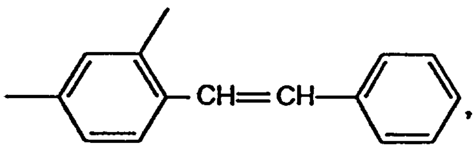
,

Le groupe sulfo W pouvant être sous forme de sel de métal alcalin ou d'ammonium.

**11.** Procédé conforme à une des revendications 1 - 10, caractérisé en ce que l'on utilise comme azurant optique un azurant ayant une structure de base de type bis-triazinylamino-stilbène, bis-triazolylstilbène, distyrylbiphényle, dérivé de bis-benzoxazolyle, coumarine ou pyrazoline.

**12.** Procédé conforme à la revendication 11, caractérisé en ce que l'on utilise un mélange d'un azurant optique et d'un ou de plusieurs colorants azoïques, anthraquinoniques, nitrés, acridoniques ou naphtoquinoniques.

**13.** Procédé conforme à une des revendications 1 à 12, caractérisé en ce que l'on utilise un composé de formule (I) enune concentration de 0,01 à 2% pour un procédé par épuisement, ou à raison de 0,1 à 10 g/l pour un procédé en continu.

**14.** Procédé conforme à la revendication 13, caractérisé en ce que l'on utilise un composé de formule (I) en une concentration allant de 0,05 à 0,5 % pour un procédé par épuisement, ou a raison de 0,2 à 2 g/l pour un procédé en continu.

**15.** Textiles moulés contenant des fibres en polyamide et présentant des solidités au moulage améliorées traités selon le procédé conforme à la revendication 1.